(19) Europäisches Patentamt
European Patent Office
Office européen des brevets

(11) **EP 4 641 695 A1**

(12) **EUROPEAN PATENT APPLICATION**
published in accordance with Art. 153(4) EPC

(43) Date of publication:
**29.10.2025 Bulletin 2025/44**

(21) Application number: **22969693.5**

(22) Date of filing: **29.12.2022**

(51) International Patent Classification (IPC):
**H01M 4/62** (2006.01)     **H01M 10/0567** (2010.01)

(52) Cooperative Patent Classification (CPC):
**H01M 10/0567; H01G 11/06; H01G 11/30;**
**H01G 11/60; H01G 11/64; H01M 4/366;**
**H01M 4/5825; H01M 4/62; H01M 10/0569;**
H01M 10/0525; H01M 10/4285; Y02E 60/10

(86) International application number:
**PCT/CN2022/143485**

(87) International publication number:
**WO 2024/138546 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Dongguan Amperex Technology**
**Limited**
**Dongguan City, Guangdong Province 523000**
**(CN)**

(72) Inventors:
• XU, Chunrui
  **Dongguan, Guangdong 523000 (CN)**
• CHEN, Hui
  **Dongguan, Guangdong 523000 (CN)**
• ZHANG, Caohuan
  **Dongguan, Guangdong 523000 (CN)**
• ZHOU, Shaoyun
  **Dongguan, Guangdong 523000 (CN)**

(74) Representative: **Icosa**
**83 avenue Denfert-Rochereau**
**75014 Paris (FR)**

(54) **ELECTROCHEMICAL APPARATUS AND ELECTRONIC DEVICE**

(57)     The present application discloses an electrochemical apparatus and an electronic device. The electrochemical apparatus includes a positive electrode plate and an electrolyte; where the electrolyte includes an additive A, and the additive A is an organic additive containing lone pair of electrons; and the positive electrode plate includes a positive electrode material layer, the positive electrode material layer includes a positive electrode active material, and the positive electrode active material includes an element M; where the element M includes at least one of Cu or Zn; and based on a mass of the positive electrode active material, a proportion of the element M is t ppm, t satisfying $1 \leq t \leq 500$. The lone pair of electrons containing in the organic additive in the electrolyte can enter the empty orbitals of the element M in the positive electrode active material, and can complex with the element M to form a complex covering the surface of the metal particles containing the element M, forming a protective film for the metal particles. This makes the element M unable to dissolve into the electrolyte during the charge and discharge process, preventing the element M from growing dendrites on the negative electrode to pierce the separator and cause a short circuit.

EP 4 641 695 A1

**Description**

**TECHNICAL FIELD**

This application relates to the field of electrochemical technology, and in particular, to an electrochemical apparatus and an electronic device.

**BACKGROUND**

Due to advantages such as high energy density, low maintenance, relatively low self-discharge, long cycle life, no memory effect, stable working voltage, and environmental friendliness, lithium-ion batteries have received widespread attention and are widely used in the fields such as portable electronic devices (including electronic products such as mobile phones, laptops, and cameras), electric tools, and electric vehicles. However, with the rapid development of technology and the further expansion of market demand, the recycling of materials for lithium-ion batteries can effectively save energy, significantly reduce the material costs for lithium-ion battery production, and further solve the problem of environmental pollution caused by lithium-ion batteries discarded after use. Therefore, how to recycle and reuse the waste materials generated during production of lithium-ion batteries and the materials of used lithium-ion batteries has become a technical issue to be addressed urgently.

**SUMMARY**

To address the above issue, embodiments of this application provide an electrochemical apparatus and an electronic device.

According to a first aspect, this application provides an electrochemical apparatus including a positive electrode plate and an electrolyte, where the electrolyte includes an additive A, and the additive A is an organic additive containing lone pair of electrons; and the positive electrode plate includes a positive electrode material layer, the positive electrode material layer includes a positive electrode active material, and the positive electrode active material includes an element M; where the element M includes at least one of Cu or Zn; and based on a mass of the positive electrode active material, a proportion of the element M is t ppm, t satisfying $1 \leq t \leq 500$.

In some exemplary embodiments, the additive A includes at least one of N-containing heterocyclic compound, phosphite compound, or nitrile compound.

In some exemplary embodiments, the N-containing heterocyclic compound includes at least one of pyridine compound, quinoxaline, isoquinoline, phenazine, 1,5-naphthyridine, pyrazine, or pyridazine; where

the pyridine compound includes at least one of pyridine, 2-fluoropyridine, 3-fluoropyridine, 4-fluoropyridine, 2,3-difluoropyridine, 2,4-difluoropyridine, 2,5-difluoropyridine, 3,4-difluoropyridine, 2,3,4-trifluoropyridine, 2-methylpyridine, 3-methylpyridine, 4-methylpyridine, 2-ethylpyridine, 3-ethylpyridine, N-methylpyrrole, 2,6-dimethylpyridine, 4-ethylpyridine, 3,5-dimethylpyridine, 4,4'-bipyridine, 4-ethynylpyridine, 4-phenylpyridine, or pyrido[3,4-B]pyrazine;

the phosphite compound includes at least one of trimethyl phosphite, triethyl phosphite, tripropyl phosphite, tributyl phosphite, triphenyl phosphite, triallyl phosphite, tri-propynyl phosphite, tris(trimethylsilyl) phosphite, dimethyl ethyl phosphite, diethyl cyanomethylphosphonate, or diethyl cyanoethylphosphonate; and

the nitrile compound includes at least one of acetonitrile, propionitrile, butyronitrile, valeronitrile, hexanenitrile, heptanenitrile, octanenitrile, isobutyronitrile, allyl cyanide, 6-heptynenitrile, cyclohexanecarbonitrile, 2-cyclopentaneacetonitrile, malononitrile, succinonitrile, glutaronitrile, adiponitrile, pimelonitrile, suberonitrile, methylglutaronitrile, 2-propylvaleronitrile, 1,2-bis(cyanoethoxy)ethane, 1,4-dicyano-2-butene, 1,3,6-hexanetricarbonitrile, 1,3,5-cyclohexanetricarbonitrile, 1,3,5-benzenetricarbonitrile, 1,2,3-tri(2-cyanoethoxy)propane, or 3-methoxypropionitrile.

In some exemplary embodiments, t satisfies $1 \leq t \leq 200$.

In some exemplary embodiments, the positive electrode active material includes a lithium iron phosphate compound with an olivine-type crystal structure, and based on the mass of the positive electrode active material, a mass percentage of element Fe in the lithium iron phosphate compound is g%, where g and t satisfy a relational expression: $0.025 \leq t/g \leq 16.7$.

In some exemplary embodiments, $0.025 \leq t/g \leq 6$.

In some exemplary embodiments, based on the mass of the positive electrode active material, a mass percentage of element Fe in the lithium iron phosphate compound is g%, where g satisfies $20 \leq g \leq 40$.

In some exemplary embodiments, based on a mass of the electrolyte, a mass percentage of the additive A is a%, where a and t satisfy a relational expression: $0.5 \leq t/a \leq 1000$.

In some exemplary embodiments, $25 \leq t/a \leq 100$.

In some exemplary embodiments, based on the mass of the electrolyte, a mass percentage of the additive A is a%, where $0.1 \leq a \leq 5$.

In some exemplary embodiments, $0.5 \leq a \leq 2.2$.

In some exemplary embodiments, the positive electrode plate further includes a positive electrode current collector, where the positive electrode material layer is disposed on a surface of the positive electrode current collector; and

a coating weight of the positive electrode material layer is z g/1540.25 mm$^2$, z satisfying $0.22 \leq z \leq 0.45$.

In some exemplary embodiments, z and t satisfy a relational expression:

$$220 \leq t/z \leq 480.$$

In some exemplary embodiments, the electrolyte further includes a non-aqueous organic solvent, where the non-aqueous organic solvent includes at least one of linear carbonate compound or linear carboxylate compound;

at 25°C, a viscosity of the linear carbonate compound is $\leq 0.7$ mPa·s, and a viscosity of the linear carboxylate compound is $\leq 0.7$ mPa·s; and

based on the mass of the electrolyte, a percentage of a sum of masses of the linear carbonate compound and the linear carboxylate compound is b%, where b and z satisfy a relational expression: $30 \leq b/z \leq 300$.

In some exemplary embodiments, $50 \leq b/z \leq 182$.

In some exemplary embodiments, the electrolyte further includes a non-aqueous organic solvent, where the non-aqueous organic solvent includes at least one of linear carbonate compound or linear carboxylate compound; and based on the mass of the electrolyte, a percentage of a sum of masses of the linear carbonate compound and the linear carboxylate compound is b%, where b satisfies $10 \leq b \leq 70$.

In some exemplary embodiments, $25 \leq b \leq 55$.

According to a second aspect, this application provides an electronic device, including the foregoing electrochemical apparatus.

Based on the electrochemical apparatus and electronic device in the embodiments of this application, with an organic additive containing lone pair of electrons added into the electrolyte, the lone pair of electrons can enter the empty orbitals of the element M, and the organic additive containing lone pair of electrons can complex with the element M to form a complex covering the surface of metal particles containing the element M, forming a protective film for metal particles. This makes the element M unable to dissolve into the electrolyte during the charge and discharge process, so that the element M cannot accept the electrons and precipitate on the negative electrode, preventing the element M from growing dendrites on the negative electrode to pierce the separator and cause a short circuit.

## DESCRIPTION OF EMBODIMENTS

To make the objectives, technical solutions, and advantages of this application more comprehensible, the following describes this application in detail with reference to the embodiments. It should be understood that the specific embodiments described herein are merely used to explain this application but are not intended to limit this application.

The inventors have found that the positive electrode material layer of the recycled electrochemical apparatus usually contains a large number of metal particles, such as copper and zinc metal particles, and these metal particles include metal particles with low oxidation potential. The metal particles with low oxidation potential are present in the positive electrode material layer. During the charge and discharge process of the electrochemical apparatus, they are easily oxidized and dissolved, and then accept electrons on the electrode causing growth of dendrites, and short-circuit points are generated in the electrochemical apparatus, affecting the charge and discharge performance and safety performance of the electrochemical apparatus. In view of this, this application provides an electrochemical apparatus that allows recycling of material of a positive electrode material layer of the recycled electrochemical apparatus and has an organic additive containing lone pair of electrons introduced into an electrolyte of the electrochemical apparatus. The addition of the organic additive containing lone pair of electrons can significantly improve the cycling performance, cell K value, storage performance, and hot-box performance of the electrochemical apparatus.

Specifically, the electrochemical apparatus of this application includes a positive electrode plate, a negative electrode plate, a separator, and an electrolyte, with the separator disposed between the positive electrode plate and the negative electrode plate. The electrolyte includes an additive A, and the additive A is an organic additive containing lone pair of electrons. The positive electrode plate includes a positive electrode material layer, the positive electrode material layer includes a positive electrode active material, and the positive electrode active material includes an element M; where the element M includes at least one of Cu or Zn; and based on the mass of the positive electrode active material, a proportion of the element M is t ppm, t satisfying $1 \leq t \leq 500$.

The element M is a metal impurity that cannot be removed from the positive electrode material layer of the recycled electrochemical apparatus, and the element M is present in the positive electrode material layer of the positive electrode plate in the form of metal particles. The element M has an oxidation potential lower than the upper limit voltage of the electrochemical apparatus during the charge process, so it is easy to oxidize on the electrode during the charge process to generate metal ions which are dissolved in the electrolyte. Then, the metal ions migrate with the electrolyte to the negative electrode, accept electrons, and precipitate as metal dendrites. The metal dendrites continuously grow during the cycling process and may pierce the separator, causing a short circuit. According to this application, with an organic additive containing lone pair of electrons added into the electrolyte, the lone pair of electrons of the organic additive can enter the empty orbitals of the element M, and the organic additive containing lone pair of electrons can complex with the element M to form a complex covering the surface of metal particles containing the element M, forming a protective film for metal particles. This makes the element M unable to dissolve into the electrolyte during the charge and discharge process, so that the element M cannot accept the electrons and precipitate on the negative electrode, preventing the element M from growing dendrites on the negative electrode to pierce the separator and cause a short circuit.

In some exemplary embodiments, the proportion of the element M may be 1 ppm, 10 ppm, 35 ppm, 50 ppm, 70 ppm, 100 ppm, 150 ppm, 200 ppm, 255 ppm, 345 ppm, 425 ppm, 460 ppm, 500 ppm, or any value within a range defined by any two of these values. Preferably, t satisfies $1 \leq t \leq 200$. In this case, the electrochemical apparatus has better cycling performance and storage performance.

In some exemplary embodiments, the additive A includes at least one of N-containing heterocyclic compound, pyridine compound, phosphite compound, or nitrile compound.

The N-containing heterocyclic compound includes at least one of quinoxaline, isoquinoline, phenazine, 1,5-naphthyridine, pyrazine, or pyridazine.

The pyridine compound includes at least one of pyridine, 2-fluoropyridine, 3-fluoropyridine, 4-fluoropyridine, 2,3-difluoropyridine, 2,4-difluoropyridine, 2,5-difluoropyridine, 3,4-difluoropyridine, 2,3,4-trifluoropyridine, 2-methylpyridine, 3-methylpyridine, 4-methylpyridine, 2-ethylpyridine, 3-ethylpyridine, N-methylpyrrole, 2,6-dimethylpyridine, 4-ethylpyridine, 3,5-dimethylpyridine, 4,4'-bipyridine, 4-ethynylpyridine, 4-phenylpyridine, or pyrido[3,4-B]pyrazine.

The phosphite compound includes at least one of trimethyl phosphite, triethyl phosphite, tripropyl phosphite, tributyl phosphite, triphenyl phosphite, triallyl phosphite, tri-propynyl phosphite, tris(trimethylsilyl) phosphite, dimethyl ethyl phosphite, diethyl cyanomethylphosphonate,, or diethyl cyanoethylphosphonate.

The nitrile compound includes at least one of acetonitrile, propionitrile, butyronitrile, valeronitrile, hexanenitrile, heptanenitrile, octanenitrile, isobutyronitrile, allyl cyanide, 6-heptynenitrile, cyclohexanecarbonitrile, 2-cyclopentaneacetonitrile, malononitrile, succinonitrile, glutaronitrile, adiponitrile, pimelonitrile, suberonitrile, methylglutaronitrile, 2-propylvaleronitrile, 1,2-bis(cyanoethoxy)ethane, 1,4-dicyano-2-butene, 1,3,6-hexanetricarbonitrile, 1,3,5-cyclohexanetricarbonitrile, 1,3,5-benzenetricarbonitrile, 1,2,3-tri(2-cyanoethoxy)propane, or 3-methoxypropionitrile.

In some exemplary embodiments, the positive electrode active material may include at least one of lithium cobalt oxide, lithium manganese oxide, lithium iron phosphate, lithium manganese iron phosphate, lithium nickel cobalt manganese oxide, lithium nickel cobalt aluminum oxide, or lithium nickel manganese oxide.

In some exemplary embodiments, the positive electrode active material includes a lithium iron phosphate compound with an olivine-type crystal structure, and based on the mass of the positive electrode active material, a mass percentage of element Fe in the lithium iron phosphate compound is g%, where g ranges from 20 to 40, and g and t satisfy a relational expression: $0.025 \leq t/g \leq 16.7$. In this case, the cycling performance and K value performance of the electrochemical apparatus can be effectively improved.

In some exemplary embodiments, t/g may be 0.025, 0.05, 0.15, 0.5, 3.6, 6.8, 10.3, 14.5, 15.3, 16.7, or any value within a range defined by any two of these values. Preferably, g and t satisfy a relational expression: $0.025 \leq t/g \leq 6$. In this case, the electrochemical apparatus has better cycling performance and K value performance.

In some example embodiments, based on a mass of the electrolyte, a mass percentage of the additive A is a%, where a and t satisfy a relational expression: $0.5 \leq t/a \leq 1000$. This can achieve more desirable cycling retention rate and storage thickness swelling rate of the electrochemical apparatus.

In some exemplary embodiments, t/a may be 0.5, 5, 13, 30, 120, 480, 760, 1000, or any value within a range defined by any two of these values. Preferably, a and t satisfy a relational expression: $25 \leq t/a \leq 100$. In this case, the electrochemical apparatus has better cycling performance and storage performance.

In some exemplary embodiments, based on the mass of the electrolyte, a mass percentage of the additive A is a%, where $0.1 \leq a \leq 5$. When the content of the additive A is within this range, the electrolyte can have a low impedance and a good complexation with the element M, inhibiting the dissolution of the element M from the positive electrode material layer, and improving the cycling performance and storage performance of the electrochemical apparatus.

In some exemplary embodiments, a may be 0.1, 0.15, 0.32, 0.5, 1.4, 2.1, 3.6, 4.8, 5, or any value within a range defined by any two of these values. Preferably, $0.5 \leq a \leq 2.2$. In this case, the electrochemical apparatus has better cycling performance and storage performance.

In some exemplary embodiments, the positive electrode plate further includes a positive electrode current collector, where the positive electrode material layer is disposed on a surface of the positive electrode current collector; and a coating weight of the positive electrode material layer is z g/1540.25 mm$^2$, z satisfying $0.22 \leq z \leq 0.45$. Within the above range, it is convenient to control the thickness of the positive electrode material layer, preventing the metal particles containing the element M from being excessively large to squeeze the positive electrode current collector and pierce the separator.

In some exemplary embodiments, z may be 0.22, 0.25, 0.3, 0.35, 0.4, 0.45, 0.5, or any value within a range defined by any two of these values. Preferably, z satisfies $0.29 \leq z \leq 0.36$. In this case, the electrochemical apparatus has better cycling performance and hot-box safety performance.

In some exemplary embodiments, z and t satisfy a relational expression: $220 \leq t/z \leq 480$. Within the above range, the positive electrode material layer has an appropriate coating thickness and can prevent the metal particles containing the element M from piercing the separator.

In some exemplary embodiments, t/z may be 220, 256, 287, 306, 412, 468, 480, or any value within a range defined by any two of these values. Preferably, z and t satisfy a relational expression: $260 \leq t/z \leq 360$. In this case, the electrochemical apparatus has better cycling performance and hot-box safety performance.

In some exemplary embodiments, the electrolyte further includes a non-aqueous organic solvent, where the non-aqueous organic solvent includes at least one of linear carbonate compound or linear carboxylate compound. For example, the linear carbonate compound includes ethylene carbonate (EC), diethyl carbonate (DEC), dimethyl carbonate (DMC), dipropyl carbonate (DPC), methyl propyl carbonate (MPC), ethyl propyl carbonate (EPC), methyl ethyl carbonate (MEC), propylene carbonate (PC), butylene carbonate (BC), vinyl ethylene carbonate (VEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene carbonate, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate; the linear carboxylate compounds include methyl formate, methyl acetate, ethyl acetate, n-propyl acetate, t-butyl acetate, methyl propionate, ethyl propionate, propyl propionate, $\gamma$-butyrolactone, decalactone, valerolactone, caprolactone, or the like.

At 25°C, a viscosity of the linear carbonate compound is $\leq 0.7$ mPa·s, and a viscosity of the linear carboxylate compound is $\leq 0.7$ mPa·s. Based on the mass of the electrolyte, a percentage of a sum of masses of the linear carbonate compound and the linear carboxylate compound is b%, where b ranges from 10 to 70, and b and z satisfy a relational expression: $32 \leq b/z \leq 300$. This can ensure good wettability of the positive electrode in the electrolyte, allowing the electrochemical apparatus to have good cycling performance and rate performance.

In some exemplary embodiments, b/z may be 32, 56, 87, 176, 212, 268, 200, 300, or any value within a range defined by any two of these values. In some exemplary embodiments, b% may be 10%, 15%, 30%, 45%, 60%, 70%, or any value within a range defined by any two of these values. Preferably, b and z satisfy a relational expression: $50 \leq b/z \leq 182$, and b% ranges from 25% to 55%, allowing the electrochemical apparatus to have better cycling performance and rate performance.

The negative electrode plate further includes a negative electrode current collector, and the negative electrode material layer is disposed on a surface of the negative electrode current collector. Due to the thickness of both the negative electrode material layer and the positive electrode material layer, when the electrolyte comes into contact with the positive electrode material layer and the negative electrode material layer, poor wettability may occur, especially when the electrolyte is consumed and cannot be replenished to the interior of the electrode material in time during the cycling process. Through use of the linear carbonate and linear carboxylate, each with a viscosity lower than 0.7 mPa·s, the overall viscosity of the electrolyte can be reduced, the conductivity of the electrolyte can be increased, and the electrolyte can wet the positive electrode material layer and the negative electrode material layer promptly, effectively ensuring the ion transport at the positive electrode material layer and the negative electrode material layer.

The non-aqueous organic solvent further includes at least one of ether compound or other organic solvents. The ether compound may include but is not limited to at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvents may include but are not limited to at least one of dimethyl sulfoxide, 1,3-dioxolane, sulfolane, 1,3-dimethyl-2-imidazolidinone, N-methyl-2-pyrrolidone, dimethylformamide, or acetonitrile. The specific selection may be made according to actual needs.

The electrolyte further includes a lithium salt, and the lithium salt and the additive A are dissolved in the non-aqueous organic solvent. The lithium salt is not particularly limited in the embodiments of this application. The lithium salt may be any lithium salt known in the art, provided that the objectives of this application can be achieved. For example, the lithium salt may include at least one of LiTFSI, LiPF$_6$, LiBF$_4$, LiAsF$_6$, LiClO$_4$, LiB(C$_6$H$_5$)$_4$, LiCH$_3$SO$_3$, LiCF$_3$SO$_3$, LiN(SO$_2$CF$_3$)$_2$, LiC(SO$_2$CF$_3$)$_3$, LiPO$_2$F$_2$, or the like.

The positive electrode active material layer further includes a positive electrode conductive agent and a positive electrode binder. The positive electrode conductive agent is not particularly limited in the embodiments of this application, provided that the objectives of this application can be achieved. For example, the positive electrode conductive agent may include at least one of conductive carbon black, acetylene black, Ketjen black, flake graphite, graphene, carbon nanotubes, or carbon fibers. The positive electrode binder is used to improve the adhesion between the materials in the positive electrode material layer, as well as the adhesion between the positive electrode material layer and the positive electrode current collector. The positive electrode binder is not particularly limited in the embodiments of this application, provided that the objectives of this application can be achieved. For example, the positive electrode binder includes at least one of polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, styrene-butadiene rubber, acrylated styrene-butadiene rubber, epoxy resin, or nylon.

The positive electrode current collector of this application is not particularly limited, and may be any well-known positive electrode current collector in the art, for example, aluminum foil, aluminum alloy foil, or a composite current collector.

The negative electrode active material is not particularly limited in the embodiments of this application, provided that the objectives of this application can be achieved. For example, the negative electrode active material may include at least one of lithium metal, lithium metal alloy, graphite, a material capable of doping/dedoping lithium, or a transition metal oxide.

The negative electrode active material layer may further include a negative electrode conductive agent and/or a negative electrode binder. The negative electrode conductive agent is not particularly limited in the embodiments of this application, provided that the objectives of this application can be achieved. For example, the negative electrode conductive agent may include at least one of carbon black, Super P, acetylene black, Ketjen black, flake graphite, graphene, carbon nanotubes, carbon fibers, or carbon nanowires. The negative electrode binder is not particularly limited in the embodiments of this application, provided that the objectives of this application can be achieved. For example, the negative electrode binder may include at least one of carboxymethyl cellulose (CMC), polyacrylic acid, polyacrylate salt, polyacrylate ester, polyvinyl pyrrolidone, polyaniline, polyimide, polyamide-imide, polysiloxane, styrene-butadiene rubber, epoxy resin, polyester resin, polyurethane resin, or polyfluorene.

The negative electrode current collector is not particularly limited in the embodiments of this application, provided that the objectives of this application can be achieved. For example, the negative electrode current collector may include at least one of a copper foil, a nickel foil, or a carbon-based current collector.

The separator of the embodiments of this application includes a substrate layer and a surface treatment layer. The substrate layer may include a polyethylene (PE) film, a polypropylene (PP) film, a polyvinylidene fluoride film, or a multilayer composite film thereof. The surface treatment layer is disposed on a surface of the substrate layer, and the surface treatment layer includes at least one of an organic coating or an inorganic coating. The organic coating is selected from at least one of polyvinylidene fluoride, vinylidene fluoride-hexafluoropropylene copolymer, polyacrylonitrile, polyimide, acrylonitrile-butadiene copolymer, acrylonitrile-styrene-butadiene copolymer, polymethyl methacrylate, polymethylacrylate, polyethyl acrylate, acrylic-styrene copolymer, polydimethylsiloxane, sodium polyacrylate, or sodium carboxymethyl cellulose. The inorganic coating is selected from at least one of $SiO_2$, $Al_2O_3$, CaO, $TiO_2$, $ZnO_2$, MgO, $ZrO_2$, or $SnO_2$.

The electrochemical apparatus further includes a positive electrode tab, a negative electrode tab, and an outer package. The positive electrode plate, the separator, and the negative electrode plate are sequentially stacked or stacked on one side and wound, the positive electrode plate is connected to the positive electrode tab and the negative electrode plate is connected to the negative electrode tab to form an electrode assembly (cell). The electrode assembly is placed in an internal space of the outer package, and the positive electrode tab and the negative electrode tab are led out from the internal space of the outer package to an external space of the outer package, so that the positive electrode tab and the negative electrode tab are electrically connected to an external circuit. Then, the electrolyte is injected into the internal space of the outer package, and the outer package is sealed to obtain the electrochemical apparatus. The outer package may be an aluminum-plastic film outer package. The outer package includes a rigid outer package or a flexible outer package. A material of the rigid outer package is, for example, metal. A material of the flexible outer package is, for example, a metal plastic film, such as an aluminum-plastic film or a steel-plastic film.

An embodiment of this application further provides an electronic device, where the electronic device includes the foregoing electrochemical apparatus. The electronic device of this application includes but is not limited to a notebook computer, an input computer, a mobile computer, an e-book player, a portable telephone, a portable fax machine, a portable copier, a portable printer, a head-mounted stereo headset, a video recorder, a liquid crystal TV, a portable cleaner, a portable CD player, a mini disc, a transceiver, an electronic notebook, a calculator, a memory card, a portable recorder, a radio, a backup power supply, a motor, a car, a motorcycle, an electric bicycle, a bicycle, a lighting appliance, a toy, a game console, a clock, an electric tool, a flash lamp, a camera, a large household battery, a commercial and industrial energy storage battery, a household energy storage battery, and a lithium-ion capacitor. It should be noted that the electrochemical apparatus of this application is not only applicable to the electronic devices listed above but also applicable to energy storage power stations, marine vehicles, and air vehicles. The air vehicles include airborne vehicles inside the atmosphere and airborne vehicles outside the atmosphere.

The following further describes this application in detail with reference to specific examples by using an example in which the electrochemical apparatus is a lithium-ion battery.

I. Performance test methods for lithium-ion battery

(1) Cycling test

At 45°C, the lithium-ion battery was charged to 3.6 V at 1C, and then discharged to 2.5 V at 1C. Such charge-discharge cycle was repeated for 1500 cycles with these conditions, and the capacity retention rate was recorded. The test was stopped if the capacity retention rate was lower than 50%.

(2) K value test

At 25°C, the lithium-ion battery was charged at 0.5C for 32 minutes, and then the voltage OCV1 of the lithium-ion battery was tested. The lithium-ion battery was placed at 25°C for 48 hours, and then the voltage OCVB of the lithium-ion battery was tested. K value of the lithium-ion battery (mV/h) = (OCV1 - OCVB)/48. Fifty cells were tested in parallel, and the median was recorded as the K value.

(3) 60°C high-temperature storage test process

The lithium-ion battery was charged at a constant current of 0.5C to 3.6 V at 25°C, and then charged at a constant voltage to a current of 0.05C. The thickness of the lithium-ion battery was measured and recorded as d0. The battery was placed in a 60°C oven for 90 days, and the thickness at this time was monitored and recorded as d. Thickness swelling rate (%) of lithium-ion battery after 90 days of storage at 60°C = (d - d0)/d0 $\times$ 100%. The test was stopped if the thickness swelling rate was greater than 50%.

(4) Test method for rate temperature rise of lithium-ion battery

At 25°C, the lithium-ion battery was discharged to 2.5 V at 0.5C, charged to 3.6 V at 1C, and then discharged at a rate of 6C at a constant temperature of 25°C. The surface temperature change of the electrode assembly was monitored, and the highest temperature during the process was recorded as t. The temperature rise of the lithium-ion battery at 6C rate was calculated, namely, t - 25°C.

(5) Hot-box test process

The battery was charged at a constant current of 0.5C to 3.6 V, then charged at a constant voltage of 3.6 V to 0.05C, and left standing at 25±5°C for 60 minutes. The appearance was checked and photographed. The temperature was raised to 140°C±2°C at a velocity of 5°C/min±2°C/min, and that temperature was maintained for 140 minutes. After the test, the appearance was checked and photographed. The voltage and temperature were monitored during the test. Ten cells were tested in parallel, and the cell passed the test if no fire or smoke occurred. The number of cells that passed the test was recorded.

(6) Viscosity test

Viscosity test: The electrolyte was placed in a 25°C constant temperature water bath for at least 30 minutes. A viscometer (Brookfield, DV1MLV) was used, with the rotor ULA selected. The test conditions were set as follows: 20cP for range, a speed at a torque of 10% to 100%, and 10 min for test duration.

II. Preparation method of lithium-ion battery

1. Preparation of electrolyte

In an argon glove box with a water content of <10 ppm, ethylene carbonate (abbreviated as EC) and diethyl carbonate (abbreviated as DEC) were mixed to uniformity at a mass ratio of 4:6 to obtain a non-aqueous organic solvent. Then, the fully dried lithium salt $LiPF_6$ was dissolved in the above non-aqueous organic solvent at a mass percentage of 12.5% to prepare the base electrolyte in the examples.
The additive A was added to the above base electrolyte to obtain the electrolyte.

2. Preparation of positive electrode plate

The recycled positive electrode active material (the lithium iron phosphate compound with an olivine-type crystal structure or the lithium cobalt oxide), conductive carbon black, and binder polyvinylidene fluoride (abbreviated as PVDF) were fully stirred and mixed at a weight ratio of 97.9:0.4:0.5:1.2 in an appropriate amount of N-methylpyrrolidone (abbreviated as NMP) solvent to form a uniform positive electrode slurry. The slurry was applied onto a positive electrode current collector Al foil, dried, and cold-calendered to obtain a positive electrode plate, with a positive electrode compacted density of 2.40 $g/cm^2$. The positive electrode active materials in Example I-24 and Example I-25 were lithium cobalt oxide, and the positive electrode active materials in the remaining examples were lithium iron phosphate.

3. Preparation of separator

A single-layer PE porous polymer film was used as the substrate layer, with a thickness of 5 microns and a porosity of 39%. The surface treatment layer was applied onto the surface of the substrate layer. The surface treatment layer included an inorganic coating and an organic coating, where the inorganic coating was $Al_2O_3$, and the organic coating was polyvinylidene fluoride.

4. Preparation of negative electrode plate

The negative electrode active material graphite, binder styrene-butadiene rubber (abbreviated as SBR), and thickener sodium carboxymethyl cellulose (abbreviated as CMC) were fully stirred and mixed at a weight ratio of 97.4:1.4:1.2 in an appropriate amount of deionized water to form a uniform negative electrode slurry. The negative electrode slurry was applied onto a negative electrode current collector Cu foil, dried, and cold-calendered to obtain a negative electrode plate, with a negative electrode compaction density of 1.80 $g/cm^3$.

5. Preparation of lithium-ion battery

The positive electrode plate, separator, and negative electrode plate were stacked in sequence so that the separator was sandwiched between the positive electrode plate and the negative electrode plate for separation, and the stack was wound to obtain a bare cell. The positive electrode plate was connected to the positive electrode tab, and the negative electrode plate was connected to the negative electrode tab to form an electrode assembly. The electrode assembly was placed in the internal space of the aluminum-plastic film outer package, and the positive electrode tab and the negative electrode tab were led out from the internal space of the outer package to the external space of the aluminum-plastic film outer package, so that the positive electrode tab and the negative electrode tab were electrically connected to the external circuit. The electrolyte was injected into the internal space of the aluminum-plastic film outer package, and the outer package was sealed. After processes such as vacuum packaging, standing, formation, and shaping, the preparation of the lithium-ion battery was completed.

The lithium-ion batteries of the examples and comparative examples were prepared according to the above method and tested. The related parameters of the lithium-ion batteries in the examples are shown in Tables 1 to 4.

Table 1 shows the related parameters of Comparative Example I-1 and Examples I-1 to I-25.

**Table 1**

| Item | Type of element M | Proportion t of element M (ppm) | Mass percentage g of element iron (%) | Additive A | | t/g | Retention rate after 1500 cycles at 45°C (%) | K value |
|---|---|---|---|---|---|---|---|---|
| | | | | Type | Percentage a (%) | | | |
| Comparative Example I-1 | Cu | 50 | 34 | \ | \ | 1.471 | \ | 0.5 |
| Example I-1 | Cu | 50 | 34 | Pyridine | 1 | 1.471 | 75.5% | 0.042 |
| Example I-2 | Cu | 50 | 34 | Hexanenitrile | 1 | 1.471 | 76.2% | 0.038 |
| Example I-3 | Cu | 50 | 34 | 2,4-difluoropyridine | 1 | 1.471 | 77.4% | 0.045 |
| Example I-4 | Cu | 50 | 34 | Allyl cyanide | 1 | 1.471 | 83.7% | 0.027 |
| Example I-5 | Cu | 50 | 34 | 2-propylvaleronitrile | 1 | 1.471 | 77.4% | 0.048 |
| Example I-6 | Cu | 50 | 34 | Malononitrile | 1 | 1.471 | 78.9% | 0.046 |
| Example I-7 | Cu | 50 | 34 | Succinonitrile | 1 | 1.471 | 86.9% | 0.021 |
| Example I-8 | Cu | 50 | 34 | Adiponitrile | 1 | 1.471 | 84.2% | 0.029 |
| Example I-9 | Cu | 50 | 34 | Triphenyl phosphite | 1 | 1.471 | 76.4% | 0.031 |
| Example I-10 | Cu | 50 | 34 | 1,2,3-tris(2-cyanoethoxy)propane | 1 | 1.471 | 82.7% | 0.032 |
| Example I-11 | Cu | 50 | 34 | 1,3,6-hexanetricarbonitrile | 1 | 1.471 | 84.1% | 0.025 |
| Example I-12 | Cu | 1 | 34 | 1,3,6-hexanetricarbonitrile | 1 | 0.029 | 85.7% | 0.022 |
| Example I-13 | Cu | 3 | 34 | 1,3,6-hexanetricarbonitrile | 1 | 0.088 | 85.5% | 0.027 |
| Example I-14 | Cu | 10 | 34 | 1,3,6-hexanetricarbonitrile | 1 | 0.294 | 84.9% | 0.023 |
| Example I-15 | Cu | 100 | 34 | 1,3,6-hexanetricarbonitrile | 1 | 2.941 | 84.7% | 0.031 |
| Example I-16 | Cu | 200 | 34 | 1,3,6-hexanetricarbonitrile | 1 | 5.882 | 83.5% | 0.029 |
| Example I-17 | Cu | 500 | 34 | 1,3,6-hexanetricarbonitrile | 1 | 14.706 | 81.2% | 0.035 |
| Example I-18 | Zn | 1 | 40 | Trimethyl phosphite | 1 | 0.025 | 86.0% | 0.02 |
| Example I-19 | Zn | 10 | 34 | Trimethyl phosphite | 1 | 0.294 | 85.2% | 0.028 |
| Example I-20 | Zn | 100 | 34 | Trimethyl phosphite | 1 | 2.941 | 84.8% | 0.027 |
| Example I-21 | Cu+Zn | 5 | 34 | Adiponitrile | 1 | 0.147 | 85.6% | 0.026 |
| Example I-22 | Cu+Zn | 50 | 34 | Adiponitrile | 1 | 1.471 | 84.4% | 0.031 |
| Example I-23 | Cu+Zn | 500 | 30 | Adiponitrile | 1 | 16.667 | 82.2% | 0.033 |

(continued)

| Item | Type of element M | Proportion t of element M (ppm) | Mass percentage g of element iron (%) | Additive A | | t/g | Retention rate after 1500 cycles at 45°C (%) | K value |
|---|---|---|---|---|---|---|---|---|
| | | | | Type | Percentage a (%) | | | |
| Example I-24 | Cu | 50 | 34 | 1,3,6-hexanetricarbonitrile | 1 | 1.471 | 84.3% | 0.027 |
| Example I-25 | Cu+Zn | 50 | 34 | 1,3,6-hexanetricarbonitrile | 1 | 1.471 | 84.0% | 0.025 |

As shown in Table 1, according to Comparative Example I-1 and Examples I-1 to I-25, the additive A is added in the electrolyte, and according to Examples I-11 to I-25, the positive electrode active material includes element M, and when the proportion of the element M in the positive electrode active material is 1 ppm to 500 ppm, the addition of the additive A in the electrolyte can effectively improve the cycling performance at 45°C and K value performance of the lithium-ion battery. According to Examples I-11 to I-18, preferably, when the proportion of the element M in the positive electrode active material is 1 ppm to 200 ppm, the addition of the additive A in the electrolyte better improves the performance of the lithium-ion battery.

The positive electrode active material is the positive electrode active material of the recycled electrochemical apparatus, containing metal impurities Cu and/or Zn that cannot be removed. In Examples I-1 to I-26, the additive A is added to the electrolyte, and the lone pair of electrons of additive A can enter the empty orbitals of Cu or Zn metal elements, so that Cu and/or Zn cannot dissolve into the electrolyte during the charge and discharge process, inhibiting their dissolution from the positive electrode material layer, and preventing dendrites from growing on the positive electrode to pierce the separator and cause an internal short circuit in the lithium-ion battery.

Table 2 shows the related parameters of Examples II-1 to II-14.

**Table 2**

| Item | Type of element M | Proportion of element M (ppm) | Additive A | | t/a | Retention rate after 1500 cycles at 45°C (%) | Thickness swelling rate after storage at 60°C (%) |
|---|---|---|---|---|---|---|---|
| | | | Type | Percentage a (%) | | | |
| Example I-12 | Cu | 1 | 1,3,6-hexanetricarbonitrile | 2 | 0.5 | 85.7% | 8.2% |
| Example II-1 | Cu | 50 | 1,3,6-hexanetricarbonitrile | 0.1 | 500 | 78.2% | 15.1% |
| Example II-2 | Cu | 50 | 1,3,6-hexanetricarbonitrile | 0.5 | 100 | 83.2% | 12.3% |
| Example II-3 | Cu | 50 | 1,3,6-hexanetricarbonitrile | 1 | 50 | 84.7% | 10.9% |
| Example II-4 | Cu | 50 | 1,3,6-hexanetricarbonitrile | 2 | 25 | 85.4% | 8.8% |
| Example II-5 | Cu | 50 | 1,3,6-hexanetricarbonitrile | 4 | 12.5 | 82.1% | 8.7% |
| Example II-6 | Cu | 200 | 1,3,6-hexanetricarbonitrile | 0.2 | 1000 | 75.6% | 17.3% |
| Example II-7 | Cu | 50 | Adiponitrile | 0.5 | 100 | 84.3% | 12.6% |
| Example II-8 | Cu | 50 | Adiponitrile | 1 | 50 | 85.1% | 11.2% |
| Example II-9 | Cu | 50 | Adiponitrile | 2 | 25 | 85.7% | 9.3% |
| Example II-10 | Cu+Zn | 50 | Pyridine | 1 | 50 | 85.5% | 13.4% |
| Example II-11 | Cu+Zn | 50 | Pyridine | 2 | 25 | 85.0% | 11.7% |
| Example II-12 | Cu+Zn | 50 | Pyridine | 4 | 12.5 | 83.6% | 11.2% |
| Example II-13 | Cu+Zn | 50 | Triphenyl phosphite | 1 | 50 | 83.2% | 13.7% |
| Example II-14 | Cu+Zn | 50 | Triphenyl phosphite | 2 | 25 | 83.6% | 12.2% |

As shown in Table 2, according to Examples II-1 to II-14, with the ratio of the proportion of the element M to the mass percentage of the additive A in the electrolyte, t/a, controlled within a range of 0.5 to 1000, both the cycling retention rate and storage thickness swelling rate of the lithium-ion battery are more desirable. The additive A can have certain complexation with the element M in the positive electrode active material. When t/a is in the range of 25 to 100, the lithium-ion battery has better cycling performance and storage performance.

Table 3 shows the related parameters of Examples III-1 to III-10 and Comparative Example III-1.

**Table 3**

| Item | Type of element M | Proportion t of element M (ppm) | Coating weight z of positive electrode material (g/1540.25 mm$^2$) | Additive A | | t/z | Retention rate after 1500 cycles at 45°C (%) | Number of cells that passed hot-box test (50ea) |
|---|---|---|---|---|---|---|---|---|
| | | | | Type | Percentage a (%) | | | |
| Comparative Example III-1 | Cu | 100 | 0.1 | Succinonitrile | 2 | 1000 | 68.8% | 2 |
| Example III-1 | Cu | 100 | 0.22 | Succinonitrile | 2 | 455 | 83.2% | 9 |
| Example III-2 | Cu | 100 | 0.25 | Succinonitrile | 2 | 400 | 83.6% | 9 |
| Example III-3 | Cu | 100 | 0.29 | Succinonitrile | 2 | 345 | 85.4% | 10. |
| Example III-4 | Cu | 100 | 0.32 | Succinonitrile | 2 | 313 | 86.7% | 10. |
| Example III-5 | Cu | 100 | 0.36 | Succinonitrile | 2 | 278 | 85.2% | 10. |
| Example III-6 | Cu | 100 | 0.4 | Succinonitrile | 2 | 250 | 82.6% | 9 |
| Example III-7 | Cu | 100 | 0.42 | Succinonitrile | 2 | 238 | 80.5% | 8 |
| Example III-8 | Cu | 100 | 0.45 | Succinonitrile | 2 | 222 | 77.9% | 8 |
| Example III-9 | Cu+Zn | 100 | 0.32 | Allyl cyanide | 2 | 313 | 85.4% | 9 |
| Example III-10 | Cu+Zn | 100 | 0.36 | Allyl cyanide | 2 | 278 | 84.3% | 10 |

As shown in Table 3, according to Examples III-1 to III-10 and Comparative Example III-1, when the coating weight of the positive electrode material layer, z g/1540.25 mm$^2$, is adjusted to be within the range of 0.22 to 0.45, the hot-box test pass rate of the lithium-ion battery can be effectively improved. A larger value of z leads to a larger coating thickness of the positive electrode material layer. This can prevent the metal particles containing the element M from being excessively large to squeeze the current collector and pierce the separator. When z is in the range of 0.29 to 0.36, the lithium-ion battery has better cycling performance and hot-box safety performance.

Table 4 shows the related parameters of Examples IV-1 to IV-10 and Comparative Example IV-1.

**Table 4**

| Item | Type of element M | Proportion of element M (ppm) | Coating weight z of positive electrode material (g/1540.25 mm²) | Additive A | | b (%) | b/z | Retention rate after 1500 cycles at 45°C (%) | Rate temperature rise (°C) |
|---|---|---|---|---|---|---|---|---|---|
| | | | | Type | Percentage a (%) | | | | |
| Comparative Example IV-1 | Cu | 50 | 0.36 | 1,3,6-hexanetricar bonitrile | 2 | / | / | 71.5% | 63 |
| Example IV-1 | Cu | 50 | 0.36 | 1,3,6-hexanetricar bonitrile | 2 | 15 | 42 | 83.1% | 57 |
| Example IV-2 | Cu | 50 | 0.36 | 1,3,6-hexanetricar bonitrile | 2 | 25 | 69 | 84.7% | 55 |
| Example IV-3 | Cu | 50 | 0.36 | 1,3,6-hexanetricar bonitrile | 2 | 35 | 97 | 85.3% | 54 |
| Example IV-4 | Cu | 50 | 0.36 | 1,3,6-hexanetricar bonitrile | 2 | 45 | 125 | 86.7% | 53 |
| Example IV-5 | Cu | 50 | 0.36 | 1,3,6-hexanetricar bonitrile | 2 | 55 | 153 | 85.6% | 51 |
| Example IV-6 | Cu | 50 | 0.36 | 1,3,6-hexanetricar bonitrile | 2 | 65 | 181 | 82.5% | 50 |
| Example IV-7 | Cu | 50 | 0.45 | 1,3,6-hexanetricar bonitrile | 2 | 15 | 33 | 77.6% | 59 |
| Example IV-8 | Cu | 50 | 0.22 | 1,3,6-hexanetricarbonitrile | 2 | 65 | 295 | 81.3% | 47 |
| Example IV-9 | Cu+Zn | 50 | 0.45 | 1,3,6-hexanetricar bonitrile | 2 | 65 | 144 | 79.8% | 52 |
| Example IV-10 | Cu+Zn | 50 | 0.22 | 1,3,6-hexanetricar bonitrile | 2 | 15 | 68 | 85.4% | 54 |

As shown in Table 4, the percentage of the sum of masses of the linear carbonate compounds and the linear carboxylate compounds in the electrolyte is b%. According to Comparative Example IV-1 and Examples IV-1 to IV-10, when linear carbonate compounds and linear carboxylate compounds with viscosities lower than 0.7 mPa·s are added to the electrolyte, and the percentage of the sum of masses of the linear carbonate compounds and the linear carboxylate compounds in the electrolyte is 15% to 65%, the cycling performance of the lithium-ion battery is improved, and the rate temperature rise of the lithium-ion battery can be reduced. The low-viscosity linear carbonate compounds and linear carboxylate compounds also make the viscosity of the electrolyte lower, allowing ions to be smoothly transported between the positive electrode and the negative electrode. Moreover, when the thickness of the positive electrode material layer is relatively thick, the electrolyte can infiltrate into the inner layer of the positive electrode material layer, making the infiltration of the electrolyte into the positive electrode material layer more sufficient, so that after the electrolyte is consumed during the cycling process, the electrolyte can be replenished to the interior of the positive electrode material layer in time.

In the description of the present application, the list of items connected by the terms "at least one piece of", "at least one of", "at least one type of", or other similar terms can mean any combination of the listed items. For example, if items A and B are listed, "at least one of A or B" means only A, only B, or A and B. In another example, if items A, B, and C are listed, the phrase "at least one of A, B, and C" means only A; only B; only C; A and B (exclusive of C); A and C (exclusive of B); B and C (exclusive of A); or all of A, B, and C.

The foregoing descriptions are merely preferable embodiments of this application, but are not intended to limit this application. Any modification, equivalent replacement, or improvement made without departing from the spirit and principle of this application shall fall within the protection scope of this application.

**Claims**

1. An electrochemical apparatus, comprising a positive electrode plate and an electrolyte; wherein

   the electrolyte comprises an additive A, and the additive A is an organic additive containing lone pair of electrons; and
   the positive electrode plate comprises a positive electrode material layer, the positive electrode material layer comprises a positive electrode active material, and the positive electrode active material comprises an element M; wherein
   the element M comprises at least one of Cu or Zn; and
   based on a mass of the positive electrode active material, a proportion of the element M is t ppm, t satisfying $1 \leq t \leq 500$.

2. The electrochemical apparatus according to claim 1, wherein the additive A comprises at least one of N-containing heterocyclic compound, phosphite compound, or nitrile compound.

3. The electrochemical apparatus according to claim 2, wherein

   the N-containing heterocyclic compound comprises at least one of pyridine compound, quinoxaline, isoquinoline, phenazine, 1,5-naphthyridine, pyrazine, or pyridazine; wherein
   the pyridine compound comprises at least one of pyridine, 2-fluoropyridine, 3-fluoropyridine, 4-fluoropyridine, 2,3-difluoropyridine, 2,4-difluoropyridine, 2,5-difluoropyridine, 3,4-difluoropyridine, 2,3,4-trifluoropyridine, 2-methylpyridine, 3-methylpyridine, 4-methylpyridine, 2-ethylpyridine, 3-ethylpyridine, N-methylpyrrole, 2,6-dimethylpyridine, 4-ethylpyridine, 3,5-dimethylpyridine, 4,4'-bipyridine, 4-ethynylpyridine, 4-phenylpyridine, or pyrido[3,4-B]pyrazine;
   the phosphite compound comprises at least one of trimethyl phosphite, triethyl phosphite, tripropyl phosphite, tributyl phosphite, triphenyl phosphite, triallyl phosphite, tri-propynyl phosphite, tris(trimethylsilyl) phosphite, dimethyl ethyl phosphite, diethyl cyanomethylphosphonate, or diethyl cyanoethylphosphonate; and
   the nitrile compound comprises at least one of acetonitrile, propionitrile, butyronitrile, valeronitrile, hexanenitrile, heptanenitrile, octanenitrile, isobutyronitrile, allyl cyanide, 6-heptynenitrile, cyclohexanecarbonitrile, 2-cyclopentaneacetonitrile, malononitrile, succinonitrile, glutaronitrile, adiponitrile, pimelonitrile, suberonitrile, methylglutaronitrile, 2-propylvaleronitrile, 1,2-bis(cyanoethoxy)ethane, 1,4-dicyano-2-butene, 1,3,6-hexanetricarbonitrile, 1,3,5-cyclohexanetricarbonitrile, 1,3,5-benzenetricarbonitrile, 1,2,3-tri(2-cyanoethoxy)propane, or 3-methoxypropionitrile.

4. The electrochemical apparatus according to claim 1, wherein the positive electrode active material comprises a lithium iron phosphate compound with an olivine-type crystal structure, and based on the mass of the positive electrode active material, a mass percentage of element Fe in the lithium iron phosphate compound is g%, wherein $20 \leq g \leq 40$, and g and t satisfy a relational expression: $0.025 \leq t/g \leq 16.7$.

5. The electrochemical apparatus according to claim 1, wherein based on a mass of the electrolyte, a mass percentage of the additive A is a%, wherein a and t satisfy a relational expression: $0.5 \leq t/a \leq 1000$.

6. The electrochemical apparatus according to claim 1, wherein based on a mass of the electrolyte, a mass percentage of the additive A is a%, wherein $0.07 \leq a \leq 5$.

7. The electrochemical apparatus according to any one of claims 1 to 6, wherein the electrochemical apparatus satisfies at least one of the following conditions:

(1)

$$1 \leq t \leq 200;$$

(2) the positive electrode active material comprises a lithium iron phosphate compound with an olivine-type crystal structure, and based on the mass of the positive electrode active material, a mass percentage of the element Fe in the lithium iron phosphate compound is g%, wherein g and t satisfy a relational expression: $0.025 \leq t/g \leq 6$;
(3) based on a mass of the electrolyte, a mass percentage of the additive A is a%, wherein a and t satisfy a relational expression: $25 \leq t/a \leq 100$; or
(4) based on a mass of the electrolyte, a mass percentage of the additive A is a%, wherein $0.4 \leq a \leq 3.2$.

8. The electrochemical apparatus according to claim 1, wherein the positive electrode plate further comprises a positive electrode current collector, wherein the positive electrode material layer is disposed on a surface of the positive electrode current collector; and
a coating weight of the positive electrode material layer is z g/1540.25 mm$^2$, z satisfying $0.22 \leq z \leq 0.45$.

9. The electrochemical apparatus according to claim 8, wherein z and t satisfy a relational expression: $220 \leq t/z \leq 480$.

10. The electrochemical apparatus according to claim 8, wherein the electrolyte further comprises a non-aqueous organic solvent, wherein the non-aqueous organic solvent comprises at least one of linear carbonate compound or linear carboxylate compound; and
based on a mass of the electrolyte, a percentage of a sum of masses of the linear carbonate compound and the linear carboxylate compound is b%, wherein b satisfies $10 \leq b \leq 70$, and b and z satisfy a relational expression: $30 \leq b/z \leq 300$.

11. The electrochemical apparatus according to any one of claims 8 to 10, wherein the electrochemical apparatus satisfies at least one of the following conditions:

(1)

$$0.29 \leq z \leq 0.36;$$

(2)

$$260 \leq t/z \leq 360;$$

or
(3) based on a mass of the electrolyte, a percentage of the sum of masses of the linear carbonate compound and the linear carboxylate compound is b%, wherein b and z satisfy a relational expression: $50 \leq b/z \leq 182$, and $25 \leq b \leq 55$.

12. An electronic device, comprising the electrochemical apparatus according to any one of claims 1 to 11.

## INTERNATIONAL SEARCH REPORT

| International application No. |
| --- |
| **PCT/CN2022/143485** |

**A.    CLASSIFICATION OF SUBJECT MATTER**

H01M4/62(2006.01)i；H01M10/0567 (2010.01)i

According to International Patent Classification (IPC) or to both national classification and IPC

**B.    FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 正极, 阴极, 铜, Cu, 锌, Zn, 吡啶, 亚磷酸酯, 腈, positive electrode, cathode, copper, zinc, pyridine, phosphate ester, nitrile

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 110582875 A (LG CHEMICAL LTD.) 17 December 2019 (2019-12-17) description, paragraphs 32-181 | 1-12 |
| Y | CN 110574210 A (LG CHEMICAL LTD.) 13 December 2019 (2019-12-13) description, paragraphs 13-17, 105-194, and 258 | 1-12 |
| Y | JP 2006156234 A (SANYO ELECTRIC CO., LTD.) 15 June 2006 (2006-06-15) description, paragraphs 2 and 15-54 | 1-12 |
| A | JP 2001243947 A (SONY CORP.) 07 September 2001 (2001-09-07) entire document | 1-12 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 September 2023** | **18 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| | | International application No. |
| --- | --- | --- |
| | | **PCT/CN2022/143485** |

| Patent document cited in search report | | | Publication date (day/month/year) | Patent family member(s) | | | Publication date (day/month/year) |
| --- | --- | --- | --- | --- | --- | --- | --- |
| CN | 110582875 | A | 17 December 2019 | US | 2020083524 | A1 | 12 March 2020 |
| | | | | US | 11258056 | B2 | 22 February 2022 |
| | | | | KR | 20190051863 | A | 15 May 2019 |
| | | | | JP | 2020532842 | A | 12 November 2020 |
| | | | | JP | 7045549 | B2 | 01 April 2022 |
| | | | | EP | 3609003 | A1 | 12 February 2020 |
| | | | | WO | 2019088806 | A1 | 15 May 2019 |
| CN | 110574210 | A | 13 December 2019 | KR | 20190008100 | A | 23 January 2019 |
| | | | | KR | 102270869 | B1 | 01 July 2021 |
| | | | | EP | 3518334 | A1 | 31 July 2019 |
| | | | | EP | 3518334 | B1 | 21 April 2021 |
| | | | | US | 2020044287 | A1 | 06 February 2020 |
| | | | | US | 11081729 | B2 | 03 August 2021 |
| | | | | WO | 2019013501 | A1 | 17 January 2019 |
| | | | | CN | 110574210 | B | 05 August 2022 |
| JP | 2006156234 | A | 15 June 2006 | None | | | |
| JP | 2001243947 | A | 07 September 2001 | None | | | |

Form PCT/ISA/210 (patent family annex) (July 2022)